# EUROPÄISCHE PATENTSCHRIFT

(11) **EP 2 003 074 B1**
(45) Veröffentlichungstag und Bekanntmachung des Hinweises auf die Patenterteilung: **12.08.2009**
(21) Anmeldenummer: 07011833.6
(22) Anmeldetag: 15.06.2007
(51) Int. Cl.: B65G 47/14, B65G 27/16

(54) **Vorrichtung zur Förderung und zum Sortieren von Tabletten**
Device for conveying and sorting pills
Dispositif de transport et de tri de pilules

(43) Veröffentlichungstag der Anmeldung: 17.12.2008
(73) Patentinhaber: UHLMANN PAC-SYSTEME GmbH & Co. KG, 88471 Laupheim (DE)
(72) Erfinder: Heim, Ralf, 88471 Laupheim (DE); Krahl, Wolfgang, 88471 Laupheim (DE); Kronawitter, Michael, 89179 Beimerstetten (DE); Armbruster, Rolf, 89231 Neu-Ulm (DE); Geiselhardt, Bernd, 88433 Schemmerberg (DE); Noe, Joachim, 89584 Ehingen (DE)
(74) Vertreter: Wächter, Jochen

(56) Entgegenhaltungen:
- EP-A- 0 518 058
- DE-A1- 10 242 243
- JP-A- 4 153 119
- US-A- 5 826 696

## Beschreibung

Die vorliegende Erfindung betrifft eine Vorrichtung zur Förderung von Tabletten.

Derartige Vorrichtungen werden in der Arzneimittelverpackungsindustrie beispielsweise als Teil einer Füllvorrichtung verwendet, mit der eine größere Anzahl von Tabletten in flaschenartige Behälter gefüllt wird, damit einem Patienten eine ausreichende Menge an Tabletten, beispielsweise für die tägliche Einnahme, zur Verfügung steht. Um die Behälter mit der korrekten Anzahl an Tabletten zu füllen, ist es notwendig, die Tabletten vor der Befüllung der Flaschen derart zu vereinzeln, dass eine Produktüberprüfung und eine Zählung möglich ist.

Hierfür gibt es eine Reihe von Möglichkeiten. Üblicherweise werden die Tabletten mit einem herkömmlichen Schwingförderer herantransportiert, in ein Füllrohr eingeführt und während des Fallens in den Behälter detektiert und gezählt. Eine Förderung von Tabletten auf dem herkömmlichen Schwingförderer führt manchmal zu Beschädigungen der Tabletten. Außerdem ist eine Produktkontrolle auf diese Weise kaum möglich, und auch die Reaktion des Systems bei Erreichen der gewünschten Anzahl von Tabletten ist geringfügig verzögert, sodass manchmal nicht die gewünschte Anzahl von Tabletten in einen Behälter gelangt.

Auch in anderen Füllvorrichtungen werden die Tabletten üblicherweise mit einem herkömmlichen Schwingförderer herantransportiert und anschließend über eine komplexe Mechanik vereinzelt und einzeln vor der Abfüllung erfasst, siehe z.B. die EP 1 389 583 A1 oder die US 6,505,460 B2. Derartige Füllvorrichtungen sind nicht nur kompliziert herzustellen, sondern sind bis dato auch noch nicht bis zur Marktreife entwickelt. Eine Produktüberprüfung dem Zählung ist aus des DE 102 42 243 A1 bekannt. Die Tabletten werden in Laufrillen eines Schwingförderers geführt, die eine Öffnung in Boden der Laufrille für die automatische Ausscheidung von medianisch beschädißen Tabletten aufweisen.

Es sind auch piezoelektrische Schwingförderer bekannt, die in verschiedenen Bereichen außerhalb der pharmazeutischen Industrie eingesetzt werden, siehe beispielsweise DE 100 05 933 B4, DE 203 20 326 U1 oder DE 103 40 455 B4. Ein Einsatz für die Förderung von Tabletten wurde bislang als zu aufwändig erachtet, da elektromagnetische Schwingförderer weitaus billiger herzustellen sind und die Möglichkeit der Vereinzelung von Tabletten mit dem piezoelektrischen Schwingförderer nicht vorhergesehen wurde.

Der vorliegenden Erfindung liegt daher die Aufgabe zugrunde, ein Beförderungssystem für Tabletten zu schaffen, bei dem die Tabletten auf einfache und zuverlässige Weise transportiert, gezählt und untersucht werden können.

Diese Aufgabe wird durch die Merkmale des Anspruchs 1 gelöst.

Erfindungsgemäß weist das Beförderungssystem für Tabletten zwei Vorrichtungen des Beförderung von Tabletten auf, jeweils unit einen Unterteil , einem Oberteil mit mindestens einer Laufrille zur Aufnahme und Beförderung der Tabletten und mehreren in einem Abstand zueinander angeordnete federnden Elementen, auf die jeweils mindestens ein piezoelektrisches Schwingelement aufgebracht ist, wobei die federnden Elemente zwischen Oberteil und Unterteil angeordnet sind und diese verbinden. Das Beförderungssystem umfasst außerdem mindestens eine Steuervorrichtung zur Erregung der piezoelektrischen Schwingelemente und damit der federnden Elemente sowie eine im Bereich der Laufrillen angeordnete Sortiervorrichtung zum Trennen von guten und schlechten Tabletten.

Die beiden Vorrichtungen sind dabei derart kaskadenförmig angeordnet, dass die Laufrille der in Förderrichtung der Tabletten gesehen ersten Vorrichtung höher liegt als die Laufrille der zweiten Vorrichtung. Außerdem weist das Beförderungssystem eine oberhalb jeder Laufrille der zweiten Vorrichtung angeordnete Prüfvorrichtung auf, welche die Qualität der in der Laufrille transportierten Tabletten überprüft. Die zweite Vorrichtung erzielt eine größere Fördergeschwindigkeit der Tabletten als die erste Vorrichtung und die Fördergeschwindigkeit der Tabletten ist zur Vereinzelung der Tabletten für die durch die Prüfvorrichtung stattfindende Qualitätskontrolle steuerbar.

Durch diese Anordnung wird eine Vereinzelung der Tabletten in der Laufrille gewährleistet, was für eine einfache Zählung sowie eine Qualitätsuntersuchung der einzelnen Tabletten noch auf der Laufrille notwendig ist. Außerdem wird durch die im Bereich der Laufrille angeordnete Prüfvorrichtung und die Sortiervorrichtung eine einfache Trennung guter und schlechter Tabletten möglich.

Vorzugsweise weist jedes Oberteil eine Mehrzahl von parallel zueinander angeordneten Laufrillen auf, wodurch die Herstellungskosten gesenkt werden und der Gesamtdurchsatz der Vorrichtung erhöht werden kann.

Für eine einfache Trennung von guten und schlechten Tabletten ist es vorteilhaft, dass jede Laufrille eine Durchtrittsöffnung für Tabletten aufweist, die nahe einer Längswand der Laufrille angeordnet ist.

Um die Trennung von guten und schlechten Tabletten weiter zu unterstützen, weist jede Laufrille eine sich längs zur Durchtrittsöffnung hin erstreckende Abkantung oder Vertiefung auf, deren Breite kleiner ist als die Breite der Laufrille. Somit ist es möglich, dass gleichzeitig in der Abkantung oder Vertiefung Tabletten in Richtung der Durchtrittsöffnung hin weiterbewegt werden, während auf dem Steg, der die übrige Breite der Laufrille einnimmt, andere Tabletten gefördert werden können.

Die Prüfvorrichtung zum Überprüfen der Qualität der in der Laufrille transportierten Tabletten ist als NIR-Messvorrichtung, als kapazitive Sonde, als Laser oder als Kamera ausgestaltet.

Eine einfache mechanische Anordnung der Vorrichtung ergibt sich, wenn die federnden Elemente über Klemmblöcke fixiert sind, die jeweils an dem Oberteil oder dem Unterteil befestigt sind.

Eine besonders effektive Schwingfördervorrichtung erhält man, wenn jedes federnde Element als Trägerplatte ausgebildet ist, die quer zur Förderrichtung der Tabletten angeordnet ist und durch Schraubverbindung mit den Klemmblöcken verbunden ist, wobei an jeder Trägerplatte zwei als piezoelektrische Schwingelemente dienende Piezokeramikplatten beabstandet zueinander aufgebracht sind.

Zur Förderung der Vereinzelung der Tabletten kann jede Laufrille in Förderrichtung der Tabletten kaskadenförmig angeordnete Abschnitte aufweisen.

Eine besonders hohe Fördergeschwindigkeit der Tabletten bei gleichzeitiger Vermeidung der Anhäufung mehrerer Tabletten in einer Laufrille erzielt man, wenn der Neigungswinkel jeder Laufrille zur Horizontalen zwischen 0° und 10°, vorzugsweise zwischen 5° und 7°, und der Neigungswinkel der federnden Elemente zum Unterteil zwischen 83° und 89°, vorzugsweise zwischen 86° und 87°, beträgt.

Die Sortiervorrichtung kann vorteilhafter Weise als elektromagnetisch betätigbarer Finger ausgestaltet sein, der quer zur Transportrichtung der Tabletten bewegbar ist, oder als Vorrichtung zum Einblasen von Luft. Beide Mechanismen können abhängig vom Ergebnis der Qualitätskontrolle jeweils entweder aktiviert werden oder deaktiviert bleiben.

. Wie bereits erwählt, sind die beiden Vorrichtungen derart kaskadenförmig angeordnet, dass die Laufrille der in Förderrichtung der Tabletten gesehen ersten Vorrichtung höher liegt als die Laufrille der zweiten Vorrichtung, wobei die zweite Vorrichtung eine größere Fördergeschwindigkeit der Tabletten erzielt als die erste Vorrichtung. Dies gelingt zum Beispiel dadurch, dass die zweite Vorrichtung einen größeren Neigungswinkel zur Horizontalen aufweist als die erste Vorrichtung. Alternativ oder zusätzlich können die federnden Elemente der zweiten Vorrichtung mit einer höheren Frequenz erregt werden als die federnden Elemente der ersten Vorrichtung. So werden die Tablettenströme am Übergang zwischen den Laufrillen besonders gut auseinander gezogen und die Tabletten vereinzelt.

Weitere Einzelheiten, Merkmale und Vorteile der vorliegenden Erfindung ergeben sich aus der nachfolgenden Beschreibung unter Bezugnahme auf die Zeichnungen.
- Fig. 1: Ist eine Perspektivansicht einer Vorrichtung zur Förderung von Tabletten, die einen Teil des erfindungsgemäßen Beförderungssystems bildet;
- Fig. 2: ist eine Perspektivansicht der tragenden Teile der Vorrichtung zur Förderung von Tabletten, wobei das Oberteil mit den Laufrillen nicht dargestellt ist;
- Fig. 3: ist eine schematische Ansicht einer speziellen Ausgestaltung des federnden Elements mit zwei darauf aufgebrachten Piezokeramikplatten;
- Fig. 4: ist eine Perspektivansicht einer Variante der Vorrichtung zur Förderung von Tabletten; und
- Fig. 5: ist eine Seitenansicht der Vorrichtung zur Förderung von Tabletten; und
- Fig. 6: ist eine Perspektivansicht eines erfindungsgemäßen Beförderungssystems für Tabletten .

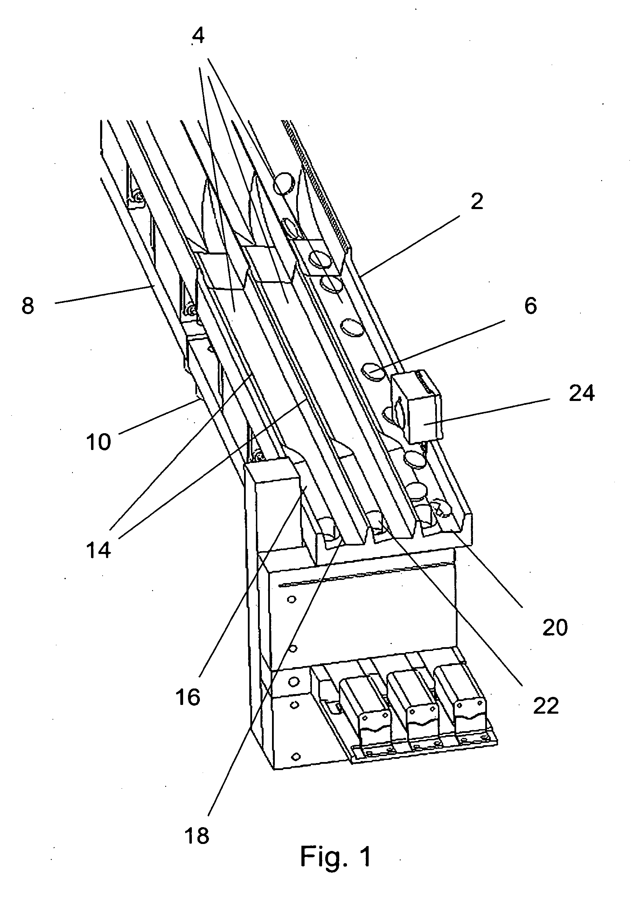

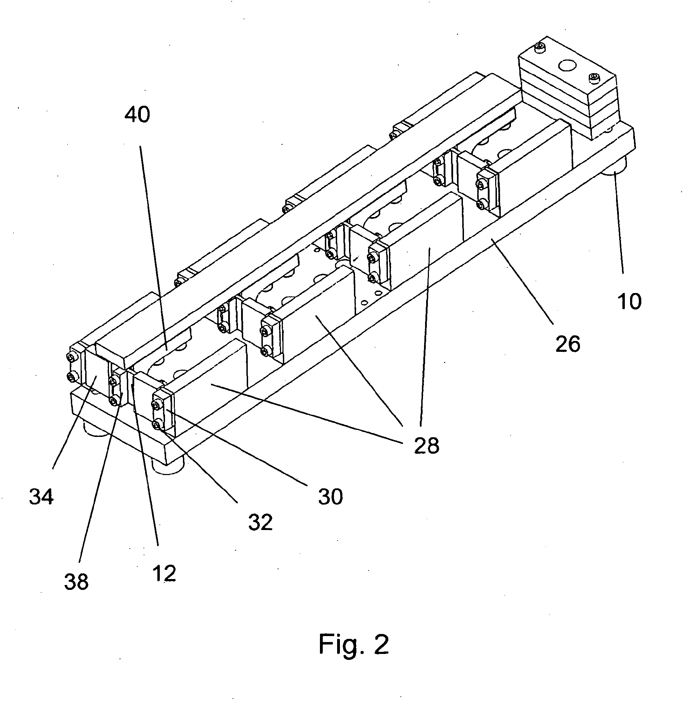

In Fig. 1 ist eine Ausführungsform einer Vorrichtung zur Förderung von Tabletten dargestellt welche einer Teil des erfindungsgemäßen Beförderungssystems bildet. Die Vorrichtung zur Förderung von Tabletten umfasst im dargestellten Beispielsfall ein Oberteil 2 mit drei parallel zueinander verlaufenden Laufrillen 4 zur Aufnahme und Förderung der Tabletten 6. Außerdem weist die Vorrichtung ein Unterteil 8 auf, das auf Gummifüßen 10 steht. Oberteil 2 und Unterteil 8 sind über mehrere in einem Abstand zueinander angeordnete federnde Elemente 12 verbunden, die in Fig. 2 deutlicher dargestellt sind.

Durch das weiter unten beschriebene Schwingfördersystem ist es möglich, die einer Laufrille 4 zugeführten Tabletten 6 durch geeignete Ansteuerung der einzelnen Komponenten des Schwingfördersystems mittels nicht dargestellter Steuervorrichtungen derart zu vereinzeln, dass eine exakte Zählung sowie eine Qualitätskontrolle jeder einzelnen Tablette 6 möglich wird.

Es ist möglich, eine nahezu beliebige Anzahl von Laufrillen 4 nebeneinander anzuordnen, wobei eine Anzahl von zwei bis vier Laufrillen 4 derzeit bevorzugt ist.

Jede Laufrille 4 weist zwei begrenzende Längswände 14 auf, welche die U-Form der Laufrillen 4 bestimmen und die Förderrichtung der Tabletten 6 festlegen. In einem Endabschnitt der Laufrillen 4 ist nahe einer Längswand 14 eine sich längs erstreckende Abkantung oder Vertiefung 16 vorgesehen, deren Breite kleiner ist als die Breite der Laufrille 4. Im dargestellten Beispielsfall beträgt die Breite der Vertiefung 16 etwa die Hälfte der Breite der Laufrille 4. Der Abschnitt 20, der auf der anderen Seite der Laufrille 4 verbleibt, kann ebenso wie die Vertiefung 16 zur jeweiligen Längswand 14 hin abfallen, d.h. es wird ein Profil mit einem Scheitel 18 in der Mitte der Laufrille 4 gebildet. Ebenso ist es möglich, dass die Vertiefung 16 eine andere Form aufweist, und der Abschnitt 20 kann auch als Steg ausgebildet sein. Hier sind alle möglichen mechanischen Ausgestaltungen denkbar, die für eine effektive Trennung der Laufrille 4 in zwei Bereiche sorgen. Eventuell kann die Vertiefung 16 auch weggelassen werden.

In der dargestellten bevorzugten Ausführungsform weist jede Laufrille 4 außerdem eine Durchtrittsöffnung 22 für Tabletten 6 auf, die nahe einer Längswand 14 der Laufrille 4 angeordnet ist. Die Durchtrittsöffnung 22 dient hier zur Aufnahme von als gut bewerteten Tabletten 6 und geht in ein nicht dargestelltes Füllrohr über, welches im Betrieb an seinem unteren Ende mit einer Verschlussklappe verschlossen bleibt, bis eine gewünschte Anzahl an Tabletten 6 von einer ebenfalls nicht dargestellten Zählvorrichtung, die die Tabletten 6 noch auf der Laufrille 4 zählt, verifiziert wurde. Anschließend wird die Verschlussklappe geöffnet und die vorbestimmte Anzahl an Tabletten 6 in entsprechende flaschenartige oder dosenartige Behälter gefüllt. Hierzu werden vorzugsweise mehrere Vorrichtungen parallel zueinander verwendet, um eine größere Anzahl von Behältern gleichzeitig befüllen zu können. Ebenso ist es denkbar, die Vorrichtung zur Förderung von Tabletten bei anderen Anwendungen einzusetzen, bei denen Tabletten auf schonende Weise vorwärts bewegt werden sollen.

Neben der bereits erwähnten Zählvorrichtung ist oberhalb jeder Laufrille 4 eine nicht dargestellte Prüfvorrichtung angeordnet, die die Qualität der in der Laufrille 4 transportierten Tabletten 6 überprüft. Die Prüfvorrichtung kann beispielsweise eine herkömmliche Kamera sein, welche die Tabletten lediglich auf Sprünge, Risse, Absplitterungen usw. untersucht, sie kann aber auch als NIR-Messvorrichtung ausgestaltet sein, welche die Konsistenz der Tablette 6 überprüfen kann, ebenso als kapazitive Sonde, als Laser oder als eine andere beliebige Prüfvorrichtung. Stromabwärts der Prüfvorrichtung ist eine Sortiervorrichtung 24 angeordnet, die zum Trennen von als gut oder schlecht eingestuften Tabletten 6 dient. In dem in Fig. 1 dargestellten Beispielsfall ist die Sortiervorrichtung 24 als elektromagnetisch betätigbarer Finger ausgebildet, der quer zur Transportrichtung der Tabletten 6 bewegbar ist und Tabletten 6 somit vom Abschnitt 20 der Laufrille 4 bei Betätigung in die Vertiefung 16 schiebt. Ebenso ist es denkbar, als Sortiervorrichtung 24 eine Vorrichtung zum Einblasen von Luft quer zur Transportrichtung der Tabletten 6 vorzusehen. Im dargestellten Beispiel werden die als gut klassifizierten Tabletten 6 von der Sortiervorrichtung 24 in die Vertiefung 16 bewegt, wo sie bis zur Durchtrittsöffnung 22 weiter wandern. Genauso ist es möglich, die Sortiervorrichtung 24 lediglich dann zu betätigen, wenn eine als schlecht bewertete Tablette 6 aussortiert werden soll. Da die meisten Tabletten 6 als gut klassifiziert werden, verringert dies die Betätigungsrate der Sortiervorrichtung 24. Es ist auch möglich, die als schlecht klassifizierten Tabletten 6 durch die Durchtrittsöffnung 22 zu leiten oder gar keine Durchtrittsöffnung 22 vorzusehen, sondern die voneinander getrennten guten und schlechten Tabletten 6 bis zum Ende der Laufrille 4 weiterzufördern und anschließend getrennt zu verarbeiten.

In Fig. 2 ist das Schwingfördersystem der Vorrichtung detailliert dargestellt. Das Unterteil 8 umfasst eine Grundplatte 26, auf der sich in Längsrichtung erstreckende Seitenplatten 28 nach oben abragen. Die Seitenplatten 28 sind an den Längsseiten der Grundplatte 26 zueinander beabstandet und in Reihe hintereinander angeordnet. Auf den jeweiligen Stirnseiten der Seitenplatten 28 sind Klemmblöcke 30 mittels Schrauben 32 fixiert. Zwischen dem Klemmblock 30 und der Seitenplatte 28 ist eine Trägerplatte festgeklemmt, die im vorliegenden Beispielsfall das federnde Element 12 bildet. Auf der Trägerplatte 12, die eine Verbindung zwischen den beiden Seitenplatten 28 herstellt und quer zur Förderrichtung der Tabletten 6 angeordnet ist, sind zwei piezoelektrische Schwingelemente 34 aufgebracht. Es hat sich als besonders vorteilhaft herausgestellt, wenn Piezokeramikplatten als piezoelektrische Elmente 34 verwendet werden, wodurch eine Doppelfeder gebildet wird, die eine Erzeugung von bis zu 30.000 längslinearen Schwingungen/min gewährleistet.

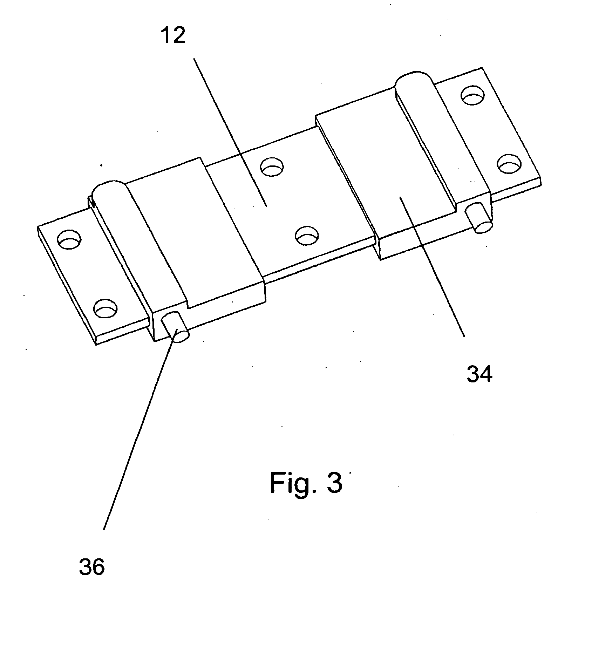

Ein solches piezoelektrisches Schwingelement 34 ist im Detail in Fig. 3 dargestellt. Die Piezokeramikplatten 34 werden über Kabel 36 von einer Steuervorrichtung (nicht dargestellt) durch Anlegen einer geeigneten Wechselspannung in Schwingungen versetzt, die sich auf die als federndes Element 12 wirkende Trägerplatte übertragen und diese anregen. Prinzipiell kann es auch ausreichen, lediglich ein piezoelektrisches Schwingelement 34 auf dem federnden Element 12 vorzusehen. Die Verbindung zwischen dem federnden Element 12 und dem piezoelektrischen Schwingelement 34 erfolgt vorzugsweise mittels Verklebung, es sind aber auch andere Aufbringungsarten denkbar.

Durch eine aufeinander abgestimmte Ansteuerung der verschiedenen piezoelektrischen Schwingelemente 34, welche beabstandet zueinander angeordnet sind, mittels mehrerer aufeinander abgestimmter Steuervorrichtungen, die jeweils eine Wechselspannung an die piezoelektrischen Schwingelemente 34 anlegen, wird es möglich, die Tabletten nahezu beliebig auf der nach unten geneigten Laufrille 4 in Bewegung zu versetzen. So kann einer erfindungsgemäßen Beförderungssystem auch eine Vereinzelung der Tabletten 6 in jeder Laufrille 4 ermöglicht werden.

Der Mittelbereich der Trägerplatte 12 ist ebenfalls über einen Klemmblock 38 an einem Winkelprofil 40 befestigt, welches mit dem Oberteil 2 der Vorrichtung verbunden ist. Auf diese Weise werden die durch das Schwingfördersystem erzeugten Schwingungen auf das Oberteil 2 und somit auch auf die Laufrillen 4 übertragen.

Die Ausgestaltung der piezoelektrischen Schwingelemente 34 und der federnden Elemente 12 kann beliebig auf Basis der existierenden Entwicklungen im Bereich der piezoelektrischen Fördertechnik modifiziert werden. So kann z.B. das piezoelektrische Schwingelement 34 weitere zusätzliche Schichten aufweisen oder in anderen Ausgestaltungen vorliegen. Auch die mechanische Verbindung zwischen dem federndem Element 12 und dem Oberteil 2 oder Unterteil 8 der Vorrichtung kann modifiziert werden.

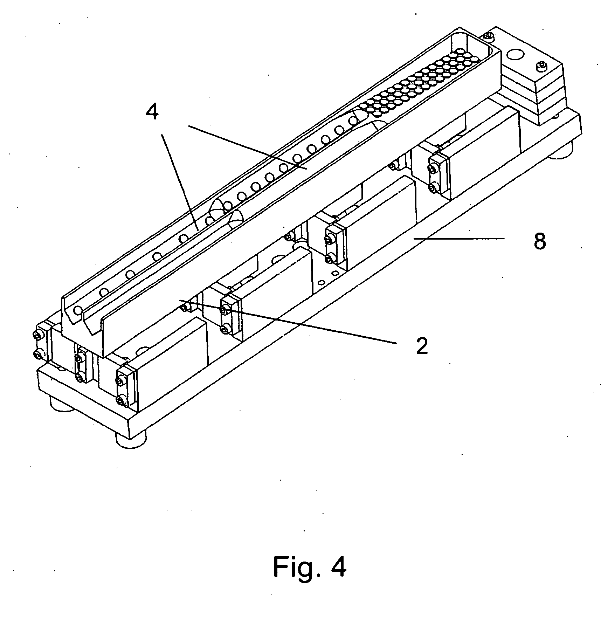

In Fig. 4 ist eine Variante der Vorrichtung dargestellt, bei der die Vereinzelung der Tabletten 6 in den Laufrillen 4 dadurch unterstützt wird, dass die Laufrille 4 in mehrere in Längsrichtung kaskadenartig aufeinander folgende Abschnitte unterteilt ist.

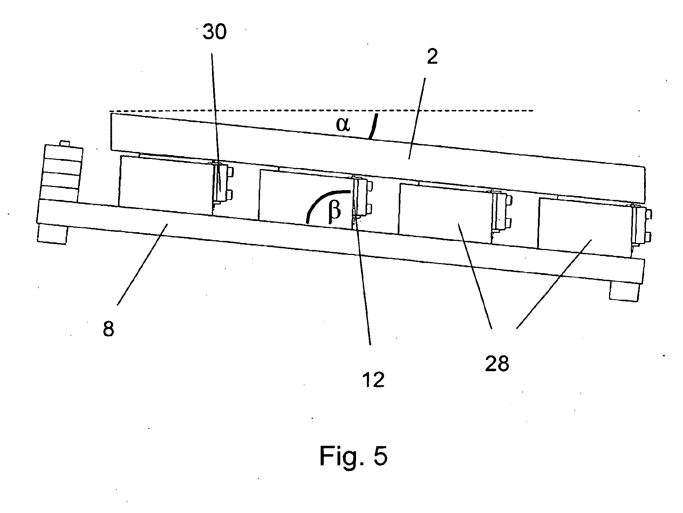

Aus den Versuchen hat sich ergeben, dass der in Fig. 5 dargestellte Neigungswinkel *α* der Laufrillen 4 zur Horizontalen, der dem Winkel zwischen dem schräg aufgestellten Unterteil 8 und dem Boden entspricht, zwischen 0° und 10°, vorzugsweise zwischen 5° und 7°, beträgt. Bei einer derartigen Neigung ist in den bisher dargestellten Beispielsfällen eine Förderleistung von bis zu 20 m/min möglich, was einer Förderung von ca. 1.000 Tabletten/min bei einem Produktabstand von zwischen 5 mm und 10 mm in der Laufrille 4 entspricht. Die Tabletten 6 gleiten im Wesentlichen in den Laufrillen 4. Bestimmte Knotenpunkte oder Nullstellen auf der Laufrille 4 können durch Ausgleichsmassen vermieden werden.

Der Federwinkel *β* zwischen den federnden Elementen 12 und dem Unterteil 2 beträgt zwischen 83° und 89°, vorzugsweise zwischen 86° und 87°. Dadurch erzielt man ein relativ ausgewogenes Verhältnis von Vertikalbeschleunigung zu Horizontalbeschleunigung der Tabletten 6.

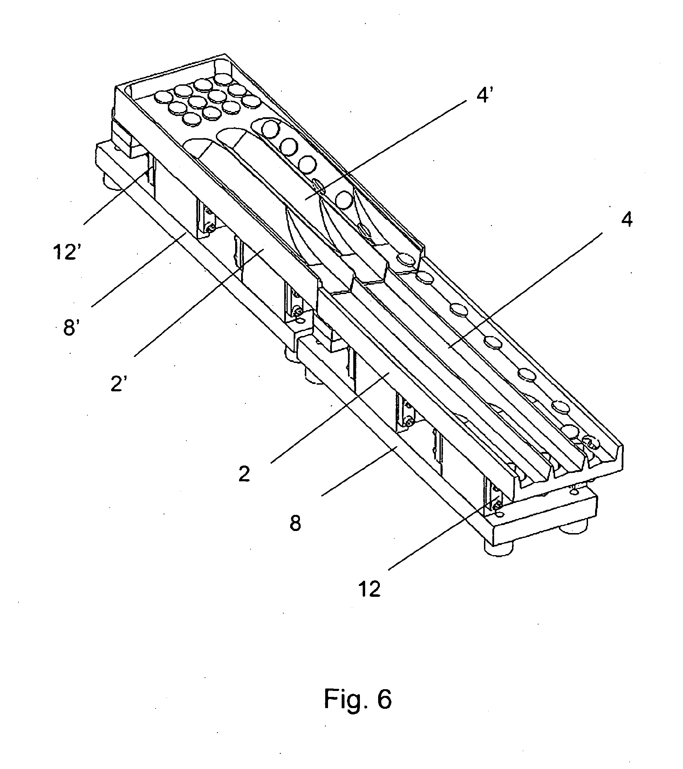

Erfindungsgemäß und besonders vorteilhaft im Sinne einer Vereinzelung von Tabletten 6 ist ein in Fig. 6 dargestelltes Beförderungssystem für Tabletten 6, bei dem eine der bislang beschriebenen Vorrichtungen mit einer Vorrichtung kombiniert ist, die ähnlich aufgebaut ist, aber keine Sortiervorrichtung 24 umfasst. Dabei sind die beiden Vorrichtungen derart kaskadenförmig angeordnet, dass die Laufrille 4' der in Förderrichtung der Tabletten 6 gesehen ersten Vorrichtung höher liegt als die Laufrille 4 der zweiten Vorrichtung, wobei die zweite Vorrichtung eine größere Fördergeschwindigkeit der Tabletten 6 erzielt als die erste Vorrichtung. Dies gelingt zum Beispiel dadurch, dass die zweite Vorrichtung einen größeren Neigungswinkel *α* zur Horizontalen aufweist als die erste Vorrichtung. Alternativ oder zusätzlich können die federnden Elemente 12 der zweiten Vorrichtung mit einer höheren Frequenz erregt werden als die federnden Elemente 12' der ersten Vorrichtung. So werden die Tablettenströme am Übergang zwischen den Laufrillen 4', 4 besonders gut auseinander gezogen und die Tabletten 6 vereinzelt. Die vorhandene Sortiervorrichtung 24 ist hier nicht dargestellt.

Als Tabletten 6 werden im Rahmen der vorliegenden Erfindung auch alle anderen Arten von festen Medikamenten bezeichnet, beispielsweise Kapseln, Dragees usw. Die Prüfvorrichtung überprüft die Tabletten auf Defekte wie Bruch, Farbe oder Wirkstoff und die schlechten Tabletten werden noch auf der Laufrille 4 aussortiert. Damit wird ein Beförderungssystem für Tabletten geschaffen, das die Tabletten mit einer steuerbaren Fördergeschwindigkeit in ruhigem, produktschonendem Transport weiterbewegt, gleichzeitig für eine Vereinzelung der Tabletten sorgt und somit sowohl das Abzählen der Tabletten als auch die Qualitätskontrolle der Tabletten noch auf der Laufrille 4 ermöglicht.

## Patentansprüche

1. Beförderungssystem für Tabletten (6), mit
zwei Vorrichtungen zum Fördern von Tabletten, die jeweils ein Unterteil (8, 8'), ein Oberteil (2, 2') mit mindestens einer Laufrille (4, 4') zur Aufnahme und Förderung der Tabletten (6) und mehrere in einem Abstand zueinander angeordnete federnde Elemente (12, 12') aufweisen, auf die jeweils mindestens ein piezoelektrisches Schwingelement (34) aufgebracht ist, wobei die federnden Elemente (12, 12') zwischen Oberteil (2, 2') und Unterteil (8, 8') angeordnet sind und diese verbinden, wobei die beiden Vorrichtungen derart kaskadenförmig angeordnet sind, dass die Laufrille (4') der in Förderrichtung der Tabletten (6) gesehen ersten Vorrichtung höher liegt als die Laufrille (4) der zweiten Vorrichtung;
mindestens einer Steuervorrichtung zur Erregung der piezoelektrischen Schwingelemente (34) und damit der federnden Elemente (12, 12');
einer oberhalb jeder Laufrille (4) der zweiten Vorrichtung angeordneten Prüfvorrichtung, welche die Qualität der in der Laufrille (4) transportierten Tabletten (6) überprüft, und
einer im Bereich jeder Laufrille (4) angeordneten Sortiervorrichtung (24) zum Trennen von guten und schlechten Tabletten (6);
wobei die zweite Vorrichtung eine größere Fördergeschwindigkeit der Tabletten (6) erzielt als die erste Vorrichtung und die Fördergeschwindigkeit der Tabletten (6) zur Vereinzelung der Tabletten (6) für die durch die Prüfvorrichtung stattfindende Qualitätskontrolle steuerbar ist.

2. Beförderungssystem für Tabletten nach Anspruch 1, **dadurch gekennzeichnet, dass** die zweite Vorrichtung einen größeren Neigungswinkel (α) zur Horizontalen aufweist als die erste Vorrichtung.

3. Beförderungssystem für Tabletten nach Anspruch 1 oder 2, **dadurch gekennzeichnet, dass** die federnden Elemente (12) der zweiten Vorrichtung mit einer höheren Frequenz erregt sind als die federnden Elemente (12') der ersten Vorrichtung.

4. Beförderungssystem für Tabletten nach einem der vorangehenden Ansprüche, **dadurch gekennzeichnet, dass** jedes Oberteil (2, 2') eine Mehrzahl von parallel zueinander angeordneten Laufrillen (4, 4') aufweist.

5. Beförderungssystem für Tabletten nach einem der vorangehenden Ansprüche, **dadurch gekennzeichnet, dass** jede Laufrille (4) der zweiten Vorrichtung eine Durchtrittsöffnung (22) für Tabletten (6) aufweist, die nahe einer Längswand (14) der Laufrille (4) angeordnet ist.

6. Beförderungssystem für Tabletten nach einem der vorangehenden Ansprüche, **dadurch gekennzeichnet, dass** jede Laufrille (4) der zweiten Vorrichtung eine sich längs zur Durchtrittsöffnung (22) hin erstreckende Abkantung oder Vertiefung (16) aufweist, deren Breite kleiner ist als die Breite der Laufrille (4).

7. Beförderungssystem für Tabletten nach einem der vorangehenden Ansprüche, **dadurch gekennzeichnet, dass** die Prüfvorrichtung zum Überprüfen der Qualität der in der Laufrille (4) transportierten Tabletten (6) als NIR-Messvorrichtung, als kapazitive Sonde, als Laser oder als Kamera ausgebildet ist.

8. Beförderungssystem für Tabletten nach einem der vorangehenden Ansprüche, **dadurch gekennzeichnet, dass** die federnden Elemente (12, 12') über Klemmblöcke (30, 38) fixiert sind, die jeweils an dem Oberteil (2, 2') oder dem Unterteil (8, 8') befestigt sind.

9. Beförderungssystem für Tabletten nach einem der vorangehenden Ansprüche, **dadurch gekennzeichnet, dass** jedes federnde Element (12, 12') als Trägerplatte ausgebildet ist, der quer zur Förderrichtung der Tabletten (6) angeordnet ist und durch Schraubverbindung mit den Klemmblöcken (30, 38) verbunden ist, wobei an jeder Trägerplatte (12, 12') zwei als piezoelektrische Schwingelemente (34) dienende Piezokeramikplatten beabstandet zueinander aufgebracht sind.

10. Beförderungssystem für Tabletten nach einem der vorangehenden Ansprüche, **dadurch gekennzeichnet, dass** jede Laufrille (4, 4') in Förderrichtung der Tabletten (6) kaskadenförmig angeordnete Abschnitte aufweist.

11. Beförderungssystem für Tabletten nach einem der vorangehenden Ansprüche, **dadurch gekennzeichnet, dass** der Neigungswinkel (α) jeder Laufrille (4, 4') zur Horizontalen zwischen 0° und 10°, vorzugsweise zwischen 5° und 7°, und der Neigungswinkel (β) der federnden Elemente (12, 12') zum Unterteil (8, 8') zwischen 83° und 89°, vorzugsweise zwischen 86° und 87°, beträgt.

12. Beförderungssystem für Tabletten nach einem der vorangehenden Ansprüche, **dadurch gekennzeichnet, dass** die Sortiervorrichtung (24) einen elektromagnetisch betätigbaren Finger aufweist, der quer zur Transportrichtung der Tabletten (6) bewegbar ist.

13. Beförderungssystem für Tabletten nach einem der Ansprüche 1 bis 11, **dadurch gekennzeichnet, dass** die Sortiervorrichtung (24) eine Vorrichtung zum Einblasen von Luft aufweist.

## Claims

1. Conveying system for tablets (6), comprising
two devices for conveying tablets, each having a lower part (8, 8'), an upper part (2, 2') with at least one guide channel (4, 4') for holding and conveying the tablets (6), and a plurality of resilient elements (12, 12'), which are arranged at a distance from one another and to each of which at least one piezoelectric vibration element (34) is attached, the resilient elements (12, 12') being arranged between the upper part (2, 2') and the lower part (8, 8') and connecting them together, the two devices being arranged in a cascaded manner, in such a way that the guide channel (4') of the first device in the direction in which the tablets (6) are conveyed is higher than the guide channel (4) of the second device;
at least one control device for exciting the piezoelectric vibration elements (34) and thus the resilient elements (12, 12');
an inspection device arranged above each guide channel (4) of the second device to check the quality of the tablets (6) being conveyed in the guide channel (4); and
a sorting device (24) arranged in the region of each guide channel (4) to separate the good and the bad tablets (6);
wherein the second device conveys the tablets (6) at a higher speed than the first device, and the speed at which the tablets (6) are conveyed can be controlled for separating out the tablets (6) from one another for the quality control operation performed by the inspection device.

2. Conveying system for tablets according to claim 1, **characterised in that** the second device has a greater angle of inclination (α) to the horizontal than the first device.

3. Conveying system for tablets according to either claim 1 or claim 2, **characterised in that** the resilient elements (12) of the second device are excited to a higher frequency than the resilient elements (12') of the first device.

4. Conveying system for tablets according to any one of the preceding claims, **characterised in that** each upper part (2, 2') comprises a plurality of guide channels (4, 4') arranged parallel to one another.

5. Conveying system for tablets according to any one of the preceding claims, **characterised in that** each guide channel (4) of the second device has a through-opening (22) for tablets (6) which is arranged close to a longitudinal wall (14) of the guide channel (4).

6. Conveying system for tablets according to any one of the preceding claims, **characterised in that** each guide channel (4) of the second device has an a chamfer or recess (16) which extends in the longitudinal direction towards the through-opening (22) and the width of which is less than the width of the guide channel (4).

7. Conveying system for tablets according to any one of the preceding claims, **characterised in that** the inspection device for checking the quality of the tablets (6) being conveyed in the guide channel (4) is configured as an NIR measuring device, as a capacitive probe, as a laser, or as a camera.

8. Conveying system for tablets according to any one of the preceding claims, **characterised in that** the resilient elements (12, 12') are held in place by clamping blocks (30, 38), each of which is attached to the upper part (2, 2') or to the lower part (8, 8').

9. Conveying system for tablets according to any one of the preceding claims, **characterised in that** each resilient element (12, 12') is configured as a support plate, which is arranged transverse to the direction in which the tablets (6) are conveyed and is connected by screws to the clamping blocks (30, 38), two piezoceramic plates which serve as piezoelectric vibration elements (34) being mounted on each support plate (12, 12') at a distance from one another.

10. Conveying system for tablets according to any one of the preceding claims, **characterised in that** each guide channel (4, 4') has portions arranged in a cascaded manner in the direction in which the tablets (6) are conveyed.

11. Conveying system for tablets according to any one of the preceding claims, **characterised in that** the angle of inclination (α) of each guide channel (4, 4') to the horizontal is between 0° and 10°, preferably between 5° and 7°, and the angle of inclination (β) of the resilient elements (12, 12') to the lower part (8, 8') is between 83° and 89°, preferably between 86° and 87°.

12. Conveying system for tablets according to any one of the preceding claims, **characterised in that** the sorting device (24) comprises an electromagnetically actuatable finger, which can be moved transverse to the direction in which the tablets (6) are conveyed.

13. Conveying system for tablets according to any one of claims 1 to 11, **characterised in that** the sorting device (24) comprises a device for delivering a blast of air.

## Revendications

1. Système de transport de comprimés (6), comprenant
deux dispositifs de transport de comprimés, qui présentent chacun une partie inférieure (8, 8'), une partie supérieure (2, 2'), avec au moins une goulotte (4, 4') destinée à recevoir et transporter les comprimés (6), et plusieurs éléments élastiques (12, 12') qui sont disposés à distance les uns des autres et sur lesquels est monté respectivement au moins un élément oscillant piézo-électrique (34), les éléments élastiques (12, 12') étant disposés entre la partie supérieure (2, 2') et la partie inférieure (8, 8') en les reliant, les deux dispositifs étant installés en cascade de manière telle que la goulotte (4') du premier dispositif, vu dans le sens de transport des comprimés (6), soit plus haute que la goulotte (4) du deuxième dispositif;
au moins un dispositif de commande pour exciter les éléments oscillants piézo-électriques (34) et donc les éléments élastiques (12, 12');
un dispositif de contrôle qui est installé au-dessus de chaque goulotte (4) du deuxième dispositif et contrôle la qualité des comprimés (6) transportés dans la goulotte (4), et
un dispositif de tri (24) qui est prévu dans la région de chaque goulotte (4) et est destiné à séparer les bons comprimés (6) des mauvais;
le deuxième dispositif atteignant une vitesse de transport des comprimés (6) qui est supérieure à celle du premier dispositif, et la vitesse de transport des comprimés (6) pouvant être commandée pour obtenir un passage individuel des comprimés (6) en vue du contrôle de qualité effectué par le dispositif de contrôle.

2. Système de transport de comprimés selon la revendication 1, **caractérisé par le fait que** le deuxième dispositif présente un angle d'inclinaison (α) par rapport à l'horizontale qui est supérieur à celui du premier dispositif.

3. Système de transport de comprimés selon la revendication 1 ou 2, **caractérisé par le fait que** les éléments élastiques (12) du deuxième dispositif sont excités avec une fréquence qui est supérieure à celle des éléments élastiques (12') du premier dispositif.

4. Système de transport de comprimés selon une des revendications précédentes, **caractérisé par le fait que** chaque partie supérieure (2, 2') présente une pluralité de goulottes (4, 4') disposées parallèlement les unes aux autres.

5. Système de transport de comprimés selon une des revendications précédentes, **caractérisé par le fait que** chaque goulotte (4) du deuxième dispositif présente une ouverture de passage (22) de comprimés (6), qui est disposée à proximité d'une paroi longitudinale (14) de la goulotte (4).

6. Système de transport de comprimés selon une des revendications précédentes, **caractérisé par le fait que** chaque goulotte (4) du deuxième dispositif présente un chanfrein ou une dépression (16) qui s'étend dans la direction longitudinale, en direction de l'ouverture de passage (22), et dont la largeur est inférieure à la largeur de la goulotte (4).

7. Système de transport de comprimés selon une des revendications précédentes, **caractérisé par le fait que** le dispositif de contrôle de la qualité des comprimés (6) transportés dans la goulotte (4) est réalisé sous forme de dispositif de mesure NIR, de sonde capacitive, de laser ou de caméra.

8. Système de transport de comprimés selon une des revendications précédentes, **caractérisé par le fait que** les éléments élastiques (12, 12') sont montés par l'intermédiaire de blocs de serrage (30, 38) qui sont fixés respectivement à la partie supérieure (2, 2') ou à la partie inférieure (8, 8').

9. Système de transport de comprimés selon une des revendications précédentes, **caractérisé par le fait que** chaque élément élastique (12, 12') est réalisé sous forme de plaque support qui est disposée transversalement par rapport à la direction de transport des comprimés (6) et est reliée par une liaison vissée aux blocs de serrage (30, 38), deux plaques piézo-céramiques, servant d'éléments oscillants piézo-électriques (34), étant disposées sur chaque plaque support (12, 12'), à distance l'une de l'autre.

10. Système de transport de comprimés selon une des revendications précédentes, **caractérisé par le fait que** chaque goulotte (4, 4') présente des tronçons qui sont disposés en cascade dans la direction de transport des comprimés (6).

11. Système de transport de comprimés selon une des revendications précédentes, **caractérisé par le fait que** l'angle d'inclinaison (α) de chaque goulotte (4, 4') par rapport à l'horizontale est compris entre 0° et 10°, de préférence entre 5° et 7°, et l'angle d'inclinaison (β) des éléments élastiques (12, 12') par rapport à la partie inférieure (8, 8') est compris entre 83° et 89°, de préférence entre 86° et 87°.

12. Système de transport de comprimés selon une des revendications précédentes, **caractérisé par le fait que** le dispositif de tri (24) présente un doigt qui peut être actionné par voie électromagnétique et peut être déplacé transversalement par rapport à la direction de transport des comprimés (6).

13. Système de transport de comprimés selon une des revendications 1 à 11, **caractérisé par le fait que** le dispositif de tri (24) présente un moyen de soufflage d'air.
